# FASCICULE DE BREVET EUROPEEN

(11) **EP 4 098 918 B1**
(45) Date de publication et mention de la délivrance du brevet: **03.07.2024**
(21) Numéro de dépôt: 22171811.7
(22) Date de dépôt: 05.05.2022
(51) Int. Cl.: F16K 31/02, F16K 1/14, F16K 31/00, G05D 23/19, B64G 1/40

(54) **VANNE DE RÉGULATION ET DISPOSITIF DE PROPULSION**
REGELVENTIL UND ANTRIEBSGERÄT
REGULATING VALVE AND PROPULSION DEVICE

(30) Priorité: 31.05.2021 FR 2105651
(43) Date de publication de la demande: 07.12.2022
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: FENDLER, Yoan, 38360 SASSENAGE (FR); CARPENTIER, Simon, 38360 SASSENAGE (FR); FRUH, Gérald, 38360 SASSENAGE (FR); VIARD, Daniel, 38360 SASSENAGE (FR); MARTIN, François, 38360 SASSENAGE (FR)
(74) Mandataire: Air Liquide

(56) Documents cités:
- FR-A- 402 004
- FR-A- 1 120 497
- FR-A1- 3 069 899
- GB-A- 1 129 220
- JP-U- S5 735 570
- US-A- 5 100 099

## Description

L'invention concerne vanne de régulation et un dispositif de propulsion.

L'invention concerne plus particulièrement une vanne de régulation de débit de fluide comprenant un corps tubulaire s'étendant selon une direction longitudinale avec une entrée de fluide et une sortie de fluide situées respectivement au niveau des deux extrémités longitudinales du corps, la vanne comprenant une buse et un piston reliés au corps, le piston étant logé dans le corps, la buse étant composée d'une pièce munie d'un passage de fluide de dimension calibrée, le passage débouchant à une extrémité de la buse et formant un siège, ledit siège tant situé contre une extrémité terminale du piston formant un obturateur empêchant l'écoulement de fluide en position fermée de la vanne, le piston comprenant un corps délimitant un passage pour le fluide dans le corps pour l'écoulement du fluide entre l'entrée et la sortie, le corps de la vanne étant constitué d'un matériau ayant un coefficient de dilatation diffèrent de celui du piston ou de la buse, la vanne comprenant un organe de chauffage qui, selon la puissance de chauffage délivrée, permet d'écarter l'extrémité de la buse et le piston par dilatations différentielles, pour autoriser l'écoulement de fluide entre l'entrée et la sortie dans une position ouverte de la vanne.

L'invention concerne en particulier tout type de vanne fonctionnant sur le principe d'ouverture (ou de fermeture) par dilatations thermiques différentes entre les pièces internes et le corps de la vanne.

Le document WO2001/011437A1 concerne une vanne de conception symétrique possédant deux buses situées de part et d'autre un saphir de fermeture des buses. Le document FR3069899A1 décrit une autre vanne à une seule buse.

Les solutions connues peuvent présenter des inconvénients parmi lesquels :
- une structure nécessitant un nombre important de pièces,
- le besoin de traitement de surface des pièces,
- un maintien de la bille saphir difficilement répétable de façon précise (risque de déformation des tubes, perte de fiabilité...).

Ainsi, en particulier, les solutions ne sont pas totalement satisfaisantes en ce qui concerne la répétabilité de leurs caractéristiques et la finesse de la régulation obtenue.

Un but de la présente invention est de pallier tout ou partie des inconvénients de l'art antérieur relevés ci-dessus.

A cette fin, la vanne selon l'invention, par ailleurs conforme à la définition générique qu'en donne le préambule ci-dessus, est essentiellement caractérisée en ce que l'extrémité terminale du piston comprend une bille qui est sertie dans le corps du piston, le corps du piston comprenant une portion tubulaire dont une extrémité est sertie autour de la bille, la portion tubulaire comprenant des rainures longitudinales débouchant au niveau de l'extrémité sertie autour de la bille, lesdites rainures délimitant des pattes longitudinales de maintien qui sont rabattues autour de la bille, lesdites rainures étant configurées pour permettre le passage du fluide lorsque la vanne est en position ouverte.

Par ailleurs, des modes de réalisation de l'invention peuvent comporter l'une ou plusieurs des caractéristiques suivantes :
- la bille et la buse sont composés de matériaux configurés pour assurer une étanchéité entre ces derniers lorsque la vanne est en position fermée,
- la bille est composée de saphir,
- la vanne comprend une unique buse,
- le passage pour le fluide délimité par le piston comprend un interstice entre le piston et le corps et/ou un passage au travers du corps du piston et/ou un passage entre le corps du piston et la bille.

Une bille en saphir permet, lorsqu'elle est comprimée sur le piston (notamment si le piston est en métal), de mater ce dernier et donc d'assurer une bonne étanchéité de la vanne lorsqu'elle est en position fermée.

L'invention concerne également dispositif de propulsion d'un engin spatial comprenant, un moteur plasmique, un réservoir de gaz sous pression, notamment du xénon ou du Krypton, un circuit fluidique reliant le réservoir au moteur, le circuit comprenant une vanne de régulation conforme à l'une quelconque des caractéristiques ci-dessus ou ci-dessous.

L'invention peut concerner également tout dispositif ou procédé alternatif comprenant toute combinaison des caractéristiques ci-dessus ou ci-dessous dans le cadre des revendications. D'autres particularités et avantages apparaîtront à la lecture de la description ci-après, faite en référence aux figures dans lesquelles :
Fig. 1 représente une vue en coupe longitudinale, schématique et partielle, d'un exemple de réalisation d'une vanne selon l'invention,
Fig. 2 représente une vue de côté, schématique et partielle, d'une partie de l'exemple de réalisation précité en position non assemblée et selon un point de vue à 90° par rapport au plan de coupe de la Fig. 1,
Fig. 3 représente une vue schématique et partielle illustrant un exemple d'utilisation d'une telle vanne dans un dispositif de propulsion.

La vanne 1 de régulation de débit de fluide illustrée comprend un corps 2 tubulaire (par exemple métallique) définissant une entrée de fluide et une sortie de fluide situées respectivement au niveau des deux extrémités longitudinales du corps 2.

Classiquement les entrée et sortie peuvent être reliées à des conduites capillaires respectives (non représentées) de transport du fluide.

La vanne 1 comprend une unique buse 3 et un piston 5 reliés au corps 2.

Le piston 5 est logé dans le corps 2, par exemple emmanché et soudé de façon étanche dans le corps 2.

La buse 3 peut être constituée par exemple d'une pièce tubulaire munie d'un passage 4 de fluide de dimension calibrée (orifice calibré déterminé) débouchant à une extrémité de la buse 3 et formant un siège.

Ce siège est situé contre une extrémité du piston 5, 15 qui forme un obturateur étanche empêchant l'écoulement de fluide entre les entrée et sortie.

Classiquement, le corps 2 est constitué d'un matériau ayant un coefficient de dilatation différent de celui du piston 5 et/ou de la buse 3.

La vanne 1 comprend en outre un organe 7 de chauffage qui, selon la puissance de chauffage délivrée, permet d'écarter l'extrémité de la buse 3 et le piston 5 par dilatations différentielles, pour autoriser l'écoulement de fluide entre l'entrée et la sortie. De plus ces rainures 8 permettent de garantir l'écoulement du fluide entre entrée et sortie lorsque la vanne est en position ouverte.

L'organe 7 de chauffage est par exemple un fil chauffant enroulé autour du corps 2.

Le piston 5 délimite un passage 6 pour le fluide dans le corps 2 entre l'entrée et la sortie pour l'écoulement du fluide entre l'entrée et la sortie.

Selon une particularité avantageuse, l'extrémité terminale du piston 5 comprend une bille 15 qui est sertie à une extrémité dans le corps du piston 5.

Comme illustré, le corps du piston 5 peut comprendre une portion tubulaire dont une extrémité est sertie autour de la bille 15. Par exemple, la portion tubulaire comprend des rainures 8 longitudinales débouchant au niveau de l'extrémité sertie autour de la bille 15 . Ces rainure 8 délimitent des pattes ou lèvres longitudinales de maintien qui sont serties (rabattues) autour de la bille 15.

Ce sertissage de la bille 15 peut être réalisé de façon répétable industriellement dans un piston 5 usiné pour être serti (lèvres prévues pour être rabattues). Ceci permet de réaliser le sertissage avec le corps du piston 5 au lieu via une déformation du corps 2 de la vanne.

Ceci peut être réalisé par un outillage mécanique spécifique. Ceci rend les performances de la vanne 1 plus répétables d'une vanne à l'autre (température/puissance électrique d'ouverture). Une précontrainte est appliquée à l'assemblage de la vanne entre la buse 3 et le piston 5, 15 afin que la bille 15 soit en contrainte sur la buse 3 garantissant ainsi l'étanchéité du système. Cette précontrainte mécanique peut être modifiée afin de modifier la température d'ouverture de la vanne.

Le dépôt ou traitement de surface prévu dans les solutions connues pour garantir une bonne étanchéité peut être supprimé, sans dégradation des performances.

Dans l'exemple illustré non limitatif, la vanne 1 est asymétrique (ouverture de la vanne ne se fait que d'un côté, c'est-à-dire qu'il n'y a un seul siège d'étanchéité). Bien entendu d'autres configurations sont possibles.

En outre, la bille 15 (de préférence en saphir) pourrait être remplacée par une pièce ayant une portion sphérique ou convexe ou autre permettant cette fermeture étanche contre le siège.

La vanne 1 peut également comprendre un écrou 9 fixe sur le corps 2 et assurant le maintien de la buse 3 ou du piston 5 avec dans le corps 2.

De même, comme illustré, la buse 3 peut être emmanchée dans le corps 2 et l'écrou 9 peut être monté sur la buse 3 et sur le corps 2 et assurer le maintien de la buse 3 dans le corps 2. L'écrou 9 peut en particulier être soudé sur le corps 2 et/ou sur la buse 3. La position fermée de la vanne (effort de contact de la bille 15 sur le siège) peut être définie par la position de serrage de l'écrou 9 sur le corps 2.

L'invention présente de nombreux avantages. La vanne peut en particulier être utilisable jusqu'à des pressions de 700bar et 400bar avec les normes spatiales. La répétabilité du produit est améliorée (garantie de l'homogénéité des performances et caractéristiques dans une production de plusieurs exemplaires).

La sortie filaire d'un seul côté de la vanne permet de l'intégrer/assembler plus facilement dans le système receveur.

De plus, une meilleure maîtrise des températures d'ouverture la vanne est obtenue.

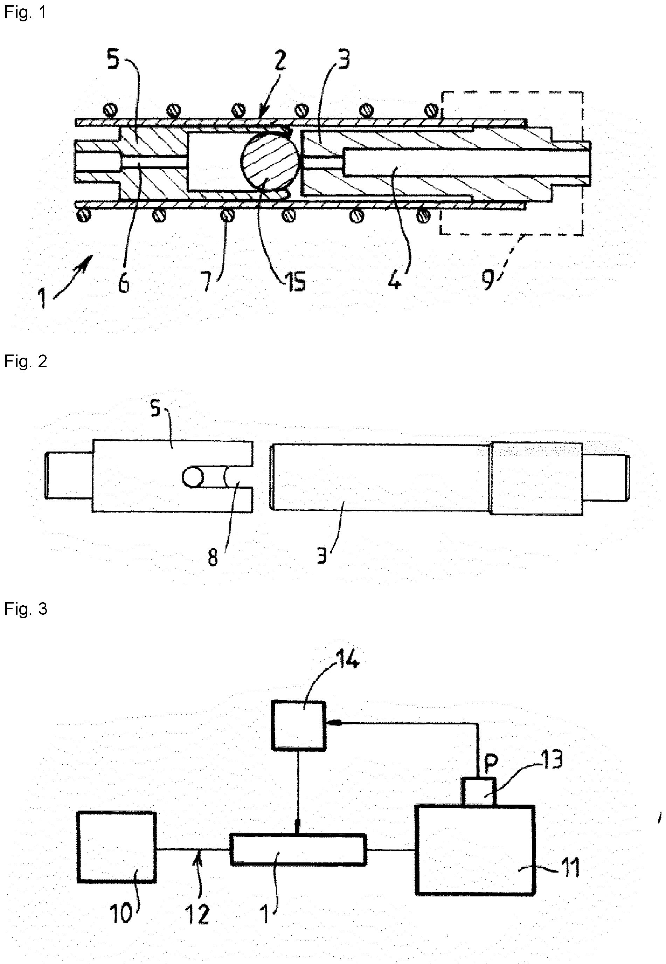

Comme illustre à la Fig.3, la vanne 1 peut être utilisée dans un dispositif de propulsion d'un engin spatial comprenant, un moteur 11 plasmique, un réservoir 10 de gaz sous pression, notamment du xénon ou du Krypton. La vanne 1 est située dans un circuit 12 fluidique relié au réservoir 10 et au moteur 11 plasmique. Le dispositif peut comprendre un capteur 13 de mesure d'un paramètre P de fonctionnement du moteur (par exemple notamment la pression du fluide en amont du moteur ou le courant de décharge du moteur) et un organe 14 électronique de régulation et de contrôle de pilotage de la vanne 1 de régulation en fonction de ce paramètre de fonctionnement. L'organe 14 électronique de régulation et de contrôle de pilotage de la vanne 1 (comprenant par exemple un microprocesseur) peut en particulier être configuré pour réguler la puissance de chauffage de l'organe 7 de chauffage (ouverture/fermeture de la vanne 1) en fonction du paramètre P de fonctionnement.

Dans un mode de réalisation ne faisant pas partie de l'invention revendiquée, la bille pourrait être remplacée par une pièce comprenant une portion sphérique.

## Revendications

1. Vanne de régulation de débit de fluide comprenant un corps (2) tubulaire s'étendant selon une direction longitudinale avec une entrée de fluide et une sortie de fluide situées respectivement au niveau des deux extrémités longitudinales du corps (2), la vanne (1) comprenant une buse (3) et un piston (5) reliés au corps (2), le piston (5) étant logé dans le corps (2), la buse (3) étant composée d'une pièce munie d'un passage (4) de fluide de dimension calibrée, le passage (4) débouchant à une extrémité de la buse (3) et formant un siège, ledit siège étant situé contre une extrémité (15) terminale du piston (5) formant un obturateur empêchant l'écoulement de fluide en position fermée de la vanne, le piston (5) comprenant un corps délimitant un passage (6) pour le fluide dans le corps (2) pour l'écoulement du fluide entre l'entrée et la sortie, le corps (2) de la vanne étant constitué d'un matériau ayant un coefficient de dilatation diffèrent de celui du piston (5) ou de la buse (3), la vanne (1) comprenant un organe (7) de chauffage qui, selon la puissance de chauffage délivrée, permet d'écarter l'extrémité de la buse (3) et le piston (5) par dilatations différentielles, pour autoriser l'écoulement de fluide entre l'entrée et la sortie dans une position ouverte de la vanne, **caractérisé en ce que** l'extrémité terminale du piston (5) comprend une bille (15) qui est sertie dans le corps du piston (5), le corps du piston (5) comprenant une portion tubulaire dont une extrémité est sertie autour de la bille (15), la portion tubulaire comprenant des rainures (8) longitudinales débouchant au niveau de l'extrémité sertie autour de la bille (15), lesdites rainures (8) délimitant des pattes longitudinales de maintien qui sont rabattues autour de la bille (15), lesdites rainures étant configurées pour permettre le passage du fluide lorsque la vanne est en position ouverte.

2. Vanne selon la revendication précédente, **caractérisée en ce que** la bille (15) et la buse sont composés de matériaux configurés pour assurer une étanchéité entre ces derniers lorsque la vanne est en position fermée par la fermeture étanche de la bille (15) contre le siège formé par la buse.

3. Vanne selon l'une quelconque des revendications précédentes, **caractérisée en ce que** la bille (15) est composée de saphir.

4. Vanne selon l'une quelconque des revendications précédentes, **caractérisée en ce qu'**elle comprend une unique buse (3).

5. Vanne selon l'une quelconque des revendications précédentes, **caractérisée en ce que** le passage (6) pour le fluide délimité par le piston (5) comprend un interstice entre le piston (5) et le corps (2) et/ou un passage au travers du corps du piston (5) et/ou un passage entre le corps du piston (5) et la bille (15).

6. Dispositif de propulsion d'un engin spatial comprenant, un moteur (11) plasmique, un réservoir (10) de gaz sous pression, notamment du xénon ou du Krypton, un circuit (12) fluidique reliant le réservoir (10) au moteur (11), le circuit (12) comprenant une vanne (1) de régulation conforme à l'une quelconque des revendications précédentes.

## Patentansprüche

1. Fluiddurchfluss-Regelventil, welches einen rohrförmigen Körper (2), der sich in einer Längsrichtung erstreckt, mit einem Fluideinlass und einem Fluidauslass, die sich jeweils an einem der zwei Längsenden des Körpers (2) befinden, umfasst, wobei das Ventil (1) eine Düse (3) und einen Kolben (5), die mit dem Körper (2) verbunden sind, umfasst, wobei der Kolben (5) im Körper (2) aufgenommen ist, wobei die Düse (3) aus einem Teil besteht, das mit einem Fluiddurchlass (4) mit kalibriertem Durchmesser versehen ist, wobei der Durchlass (4) an einem Ende der Düse (3) mündet und einen Sitz bildet, wobei der Sitz an einem Abschlussende (15) des Kolbens (5) anliegt, das einen Verschluss bildet, der das Fließen von Fluid in der geschlossenen Position des Ventils verhindert, wobei der Kolben (5) einen Körper umfasst, der einen Durchlass (6) für das Fluid im Körper (2) für das Fließen des Fluids zwischen dem Einlass und dem Auslass begrenzt, wobei der Körper (2) des Ventils aus einem Material mit einem Ausdehnungskoeffizienten besteht, der von demjenigen des Kolbens (5) oder der Düse (3) verschieden ist, wobei das Ventil (1) eine Heizeinrichtung (7) umfasst, die je nach der zugeführten Heizleistung ermöglicht, das Ende der Düse (3) und den Kolben (5) durch unterschiedliche Ausdehnungen voneinander zu entfernen, um das Fließen von Fluid zwischen dem Einlass und dem Auslass in einer geöffneten Position des Ventils zu ermöglichen, **dadurch gekennzeichnet, dass** das Abschlussende des Kolbens (5) eine Kugel (15) umfasst, die in den Körper des Kolbens (5) eingepresst ist, wobei der Körper des Kolbens (5) einen rohrförmigen Abschnitt umfasst, von dem ein Ende um die Kugel (15) gequetscht ist, wobei der rohrförmige Abschnitt Längsnuten (8) umfasst, die an dem um die Kugel (15) gequetschten Ende münden, wobei die Nuten (8) sich längs erstreckende Haltelaschen begrenzen, die um die Kugel (15) herumumgebogen sind, wobei die Nuten dafür ausgelegt sind, den Durchfluss des Fluids zu ermöglichen, wenn sich das Ventil in der geöffneten Position befindet.

2. Ventil nach dem vorhergehenden Anspruch, **dadurch gekennzeichnet, dass** die Kugel (15) und die Düse aus Materialien bestehen, die dafür ausgelegt sind, eine Dichtigkeit zwischen diesen Letzteren, wenn sich das Ventil in der geschlossenen Position befindet, durch das dichte Anliegen der Kugel (15) an dem von der Düse gebildeten Sitz sicherzustellen.

3. Ventil nach einem der vorhergehenden Ansprüche, **dadurch gekennzeichnet, dass** die Kugel (15) aus Saphir besteht.

4. Ventil nach einem der vorhergehenden Ansprüche, **dadurch gekennzeichnet, dass** es eine einzige Düse (3) umfasst.

5. Ventil nach einem der vorhergehenden Ansprüche, **dadurch gekennzeichnet, dass** der Durchlass (6) für das Fluid, der von dem Kolben (5) begrenzt wird, einen Zwischenraum zwischen dem Kolben (5) und dem Körper (2) und/oder einen Durchlass durch den Körper des Kolbens (5) und/oder einen Durchlass zwischen dem Körper des Kolbens (5) und der Kugel (15) umfasst.

6. Antriebsvorrichtung eines Raumflugkörpers, welche ein Plasmatriebwerk (11), einen Druckgastank (10), insbesondere einen Xenon- oder Kryptontank, und einen Fluidkreislauf (12), der den Tank (10) mit dem Triebwerk (11) verbindet, umfasst, wobei der Kreislauf (12) ein Regelventil (1) gemäß einem der vorhergehenden Ansprüche umfasst.

## Claims

1. Fluid flow control valve comprising a tubular body (2) extending in a longitudinal direction with a fluid inlet and a fluid outlet situated respectively at the two longitudinal ends of the body (2), the valve (1) comprising a nozzle (3) and a piston (5) connected to the body (2), the piston (5) being housed in the body (2), the nozzle (3) being made up of a part provided with a fluid passage (4) having a calibrated dimension, the passage (4) emerging at one end of the nozzle (3) and forming a seat, said seat being situated against a terminal end (15) of the piston (5) forming a shutter preventing the flow of fluid in the closed position of the valve, the piston (5) comprising a body defining a passage (6) for the fluid in the body (2) for the flow of the fluid between the inlet and the outlet, the body (2) of the valve consisting of a material having a different expansion coefficient from the piston (5) or the nozzle (3), the valve (1) comprising a heating member (7) which, depending on the heating power delivered, makes it possible to separate the end of the nozzle (3) and the piston (5) by differential expansion, to allow the flow of fluid between the inlet and the outlet in an open position of the valve, **characterized in that** the terminal end of the piston (5) comprises a ball (15) that is crimped into the body of the piston (5), the body of the piston (5) comprising a tubular portion one end of which is crimped around the ball (15), the tubular portion comprising longitudinal grooves (8) emerging at the end crimped around the ball (15), said grooves (8) defining longitudinal retaining tabs that are folded around the ball (15), said grooves being configured to allow the passage of the fluid when the valve is in the open position.

2. Valve according to the preceding claim, **characterized in that** the ball (15) and the nozzle are made from materials configured to ensure a seal between them when the valve is in the closed position through the sealed closure of the ball (15) against the seat formed by the nozzle.

3. Valve according to any one of the preceding claims, **characterized in that** the ball (15) is made from sapphire.

4. Valve according to any one of the preceding claims, **characterized in that** it comprises a single nozzle (3).

5. Valve according to any one of the preceding claims, **characterized in that** the passage (6) for the fluid defined by the piston (5) comprises a gap between the piston (5) and the body (2) and/or a passage through the body of the piston (5) and/or a passage between the body of the piston (5) and the ball (15).

6. Propulsion device for a spacecraft comprising a plasma engine (11), a tank (10) for pressurized gas, in particular xenon or krypton, and a fluid circuit (12) connecting the tank (10) to the engine (11), the circuit (12) comprising a control valve (1) according to any one of the preceding claims.
